# FASCICULE DE BREVET EUROPEEN

(11) **EP 3 673 777 B1**
(45) Date de publication et mention de la délivrance du brevet: **23.08.2023**
(21) Numéro de dépôt: 19213620.8
(22) Date de dépôt: 04.12.2019
(51) Int. Cl.: A47J 43/08

(54) **SYSTÈME ÉLECTROMÉNAGER DE PRÉPARATION CULINAIRE COMPORTANT UN ENSEMBLE ACCESSOIRE À RENVOI D'ANGLE, ENSEMBLE ACCESSOIRE, ET PORTE-ACCESSOIRE POUR UN TEL SYSTÈME ÉLECTROMÉNAGER DE PRÉPARATION CULINAIRE**
ELEKTRISCHES HAUSHALTSKÜCHEN-VORBEREITUNGSSYSTEM MIT EINER ECKENÜBERTRAGUNGS-ZUBEHÖRUNTEREINHEIT, EINER ZUBEHÖRUNTEREINHEIT UND EINER ZUBEHÖRHALTER FÜR EIN SOLCHES HAUSHALTSKÜCHEN-VORBEREITUNGSSYSTEM
ELECTRIC HOUSEHOLD KITCHEN PREPARATION SYSTEM COMPRISING AN ANGLED TRANSFER ACCESSORY ASSEMBLY, AN ACCESSORY ASSEMBLY, AND AN ACCESSORY HOLDER FOR SUCH A HOUSEHOLD KITCHEN PREPARATION SYSTEM

(30) Priorité: 27.12.2018 FR 1874262
(43) Date de publication de la demande: 01.07.2020
(73) Titulaire: SEB S.A., 69130 Ecully (FR)
(72) Inventeur: MARTIN, Philippe, 53240 Andouille (FR); CLAVERIE, Nicolas, 53960 Bonchamp Les Laval (FR)
(74) Mandataire: SEB Développement

(56) Documents cités:
- EP-A1- 2 777 447
- EP-A1- 2 777 448
- CN-Y- 2 383 454
- FR-A1- 2 971 688

## Description

### Domaine Technique

L'invention concerne le domaine technique général des appareils électroménagers de préparation culinaire comportant un socle destiné à recevoir une cuve, ou récipient de travail, et comprenant une tête solidaire du socle comportant une platine principale entraînée en rotation autour d'un axe par un moteur, ainsi que leurs accessoires.

### Technique antérieure

Dans les appareils électroménagers de préparation culinaire conventionnels du type précité, la platine principale comprend généralement un entraîneur excentré permettant l'entraînement d'un outil de travail principal au-dessus du socle selon un mouvement planétaire. Un tel appareil présente l'avantage de permettre le malaxage de pâtes ou le mixage d'ingrédients dans la cuve. Pour cette raison, ces appareils sont souvent désignés par l'appellation de « robot pâtissier », même s'ils peuvent souvent être utilisés pour des préparations autres que la pâtisserie. Dans les robots pâtissiers, la platine principale est généralement entraînée en rotation à une vitesse relativement faible, par exemple comprise entre 50 et 200 tours par minute. Certains de ces robots pâtissiers comportent une sortie auxiliaire frontale munie d'un entraîneur sur lequel peuvent être accouplés différents types d'accessoires, comme par exemple une tête hachoir, un accessoire éminceur, ou un accessoire de pressage, procurant ainsi une grande polyvalence d'utilisation. L'entraineur de cette sortie frontale est généralement entraîné en rotation par le moteur électrique à une vitesse de rotation qui est du même ordre que celle de la platine principale, soit par exemple entre 50 et 200 tours par minute. Ces vitesses sont bien adaptées à certains travaux culinaires, et donc à certains accessoires prévus pour ces travaux.

Cependant, certains travaux culinaires nécessitent des vitesses de rotation nettement plus élevées. On connaît par exemple les « mini-hachoirs » et les « blenders », dont certains se présentent sous la forme d'accessoires prévus pour être entraînés par des appareils de type robots pâtissiers tels que décrits plus haut. De tels accessoires ont en commun le fait d'avoir une enceinte refermable délimitant un espace interne fermé destiné à accueillir des aliments à préparer. De tels accessoires comportent un outil coupant rotatif qui est entraîné en rotation autour d'un axe d'outil, généralement vertical. L'outil coupant est contenu dans l'espace interne fermé et présente un moyeu central et au moins une lame coupante s'étendant radialement par rapport à l'axe d'outil depuis le moyeu central. De tels accessoires sont généralement appelés « mini-hachoirs » lorsqu'ils sont destinés à hacher des produits solides, ou « blenders » lorsqu'ils sont destinés à la préparation d'aliments liquides. Dans certains modes de réalisation, cette enceinte refermable peut être formée d'un réceptacle présentant une ouverture supérieure pour introduire des aliments à préparer et d'un couvercle amovible qui est prévu pour refermer l'espace interne fermé dans lequel sont enfermés les aliments à préparer lors du fonctionnement. Dans d'autres modes de réalisation, cette enceinte refermable peut être formée d'une embase porte-outil et d'une cloche qui vient se raccorder sur l'embase porte-outil pour former l'enceinte refermable en configuration fermée. L'outil coupant est généralement placé près d'une paroi inférieure de l'enceinte refermable, c'est-à-dire près d'une paroi inférieure du réceptacle ou près de l'embase porte-outil. L'outil coupant est généralement porté directement ou indirectement, par exemple par l'intermédiaire d'un coupleur, par cette paroi inférieure. Dans ces accessoires, l'action de découpe des aliments n'est pas due, contrairement à d'autres accessoires ou appareils culinaires, au cisaillement de l'aliment entre une lame et une contre-lame ou autre surface. L'action de découpe des aliments est due à la vitesse de la lame. On comprend donc que, dans ces accessoires, l'outil coupant doit être entraîné à une vitesse à vide importante, de préférence supérieure ou égale à 500 tours par minute, plus préférentiellement supérieure ou égale à 1000 tours par minute. On comprend aussi que de tels accessoires doivent être orientés, en fonctionnement, de telle sorte que l'outil coupant soit agencé dans une portion inférieure de l'enceinte refermable, et mobile en rotation selon un axe d'outil orienté selon la direction verticale, ou selon une direction principalement verticale, c'est-à-dire faisant un angle inférieur à 45° avec la direction verticale. Un appareil selon les caractéristiques du préambule de la revendication 1 est connu du document EP2777448.

Le document WO-2013/185677 illustre un appareil de type robot pâtissier qui comporte une sortie auxiliaire supérieure permettant d'entrainer l'outil coupant d'un accessoire de type blender susceptible d'être accroché sur l'appareil. Cet appareil comporte donc, entre son moteur électrique et sa sortie auxiliaire, une transmission mécanique à renvoi d'angle à engrenages coniques. Comme vu plus haut, puisque la sortie auxiliaire supérieure est prévue pour entraîner un accessoire de type blender, elle doit être prévue pour avoir une vitesse de rotation adaptée, donc importante. De plus, il est connu que, dans les appareils de type robot pâtissier, les sorties auxiliaires sont entraînées en permanence, sans dispositif de désaccouplement par rapport au moteur. En effet, de tels dispositifs de désaccouplement entraîneraient un accroissement du coût et de l'encombrement de l'appareil. Il en résulte que la transmission mécanique à renvoi d'angle est elle aussi entraînée en permanence dès que le moteur électrique est sollicité. Or, une transmission mécanique à renvoi d'angle est nécessairement une source de bruit supplémentaire, en plus à une fréquence liée à sa plus grande vitesse de rotation, sauf à utiliser des composants trop onéreux. De la sorte, un utilisateur d'un tel appareil, en faisant usage principalement pour sa finalité première en utilisant la platine principale, devra supporter le bruit additionnel généré par la transmission mécanique à renvoi d'angle alors qu'elle n'est pas utile pour cette tâche principale. Par ailleurs, pour les utilisateurs qui ne sont pas intéressés par la fonction assurée par un mini-hachoir ou un « blender », la présence de la transmission mécanique à renvoi d'angle représente un coût et un encombrement supplémentaires qui sont inutiles.

Le document US-4.131.034 est un exemple d'un appareil qui présente une sortie auxiliaire arrière comprenant un arbre de sortie auxiliaire qui est entraîné directement en rotation par le moteur principal de la tête, donc à une vitesse angulaire égale à celle du moteur. L'arbre de sortie auxiliaire de l'appareil est parallèle à l'axe moteur.

### Exposé de l'invention

L'invention a pour but de proposer un système électroménager de préparation culinaire comportant un ensemble accessoire amovible de type « mini-hachoir » ou « blender » conçu de telle sorte que l'appareil en lui-même reste économique et le plus silencieux possible lorsqu'il est utilisé pour sa fonction principale.

Dans ce but, l'invention propose un système électroménager de préparation culinaire selon la revendication 1.

Selon un aspect de l'invention, l'arbre de sortie auxiliaire de l'appareil électroménager de préparation culinaire est parallèle à l'axe moteur, et la transmission mécanique à renvoi d'angle est comprise dans l'ensemble accessoire en étant agencée entre l'arbre d'entrée rotatif de l'ensemble accessoire et l'outil coupant.

La transmission mécanique à renvoi d'angle peut être configurée pour multiplier une vitesse angulaire d'entrée de l'arbre d'entrée rotatif en une vitesse angulaire de travail de l'outil coupant par un rapport de multiplication de vitesses strictement supérieur à 1, de préférence compris entre 1,1 et 1,4.

La transmission mécanique à renvoi d'angle peut être configurée pour multiplier une vitesse angulaire d'entrée de l'arbre d'entrée rotatif en une vitesse angulaire de travail de l'outil coupant par un rapport de multiplication de vitesses strictement inférieur à 1, de préférence compris entre 0,1 et 0,9.

L'arbre de sortie auxiliaire peut être entraîné en rotation par le moteur principal de la tête, à une vitesse de sortie auxiliaire comprise entre 0,1 et 10 fois la vitesse angulaire moteur de l'arbre moteur, de préférence comprise entre 0,5 et 4 fois la vitesse angulaire moteur de l'arbre moteur. Dans d'autres cas, l'arbre de sortie auxiliaire peut être entraîné en rotation par le moteur principal de la tête à une vitesse de sortie auxiliaire égale à la vitesse angulaire moteur de l'arbre moteur.

La tête peut présenter un carter ayant un allongement selon la direction de l'arbre moteur, entre une extrémité arrière par laquelle la tête est liée au socle et une extrémité avant en porte-à-faux au-dessus de l'embase, et la sortie auxiliaire peut être une sortie auxiliaire arrière agencée sur une face arrière de l'extrémité arrière de la tête.

L'arbre d'entrée rotatif de l'ensemble accessoire amovible et l'axe d'outil peuvent être perpendiculaires et la transmission mécanique à renvoi d'angle peut alors comporter un renvoi d'angle à 90°.

L'arbre de sortie auxiliaire peut être un arbre de sortie auxiliaire arrière.

L'arbre de sortie auxiliaire peut être formé par une extrémité arrière de l'arbre moteur.

L'arbre de sortie auxiliaire peut être accouplé mécaniquement avec l'arbre d'entrée rotatif.

L'arbre d'entrée rotatif peut être relié mécaniquement directement à une première roue dentée de la transmission mécanique à renvoi d'angle.

La transmission mécanique à renvoi d'angle peut être configurée pour multiplier une vitesse angulaire d'entrée de l'arbre d'entrée rotatif en une vitesse angulaire de travail de l'outil coupant par un rapport de multiplication de vitesses strictement supérieur à 1, de préférence compris entre 1,1 et 1,4.

La transmission mécanique à renvoi d'angle peut être configurée pour multiplier une vitesse angulaire d'entrée de l'arbre d'entrée rotatif en une vitesse angulaire de travail de l'outil coupant par un rapport de multiplication de vitesses strictement inférieur à 1, de préférence compris entre 0,1 et 0,9.

L'arbre d'entrée rotatif peut être relié mécaniquement directement à une première roue dentée de la transmission mécanique à renvoi d'angle.

### Brève description des dessins

[**Fig. 1**] La figure 1 est une vue schématique en perspective d'un premier mode de réalisation d'un système électroménager de préparation culinaire selon l'invention.
[**Fig. 2**] La figure 2 est une vue schématique en perspective partiellement éclatée du premier mode de réalisation d'un système électroménager de préparation culinaire selon l'invention.
[**Fig. 3**] La figure 3 est une vue schématique partielle en perspective d'une partie du premier mode de réalisation d'un système électroménager de préparation culinaire selon l'invention, illustrant un porte-accessoire en position d'accrochage sur l'appareil électroménager de préparation culinaire.
[**Fig. 4**] La figure 4 est une vue similaire à celle de la figure 3, illustrant le porte-accessoire décroché de l'appareil électroménager de préparation culinaire.
[**Fig. 5**] La figure 5 est une vue schématique en coupe d'un premier mode de réalisation d'un ensemble accessoire amovible selon l'invention, avec un porte-accessoire et un accessoire liés l'un à l'autre de manière amovible.
[**Fig. 6**] La figure **6** est une vue schématique en coupe d'un second mode de réalisation d'un ensemble accessoire amovible selon l'invention, avec un accessoire amovible intégré incorporant une transmission mécanique à renvoi d'angle.

### Description des modes de réalisation

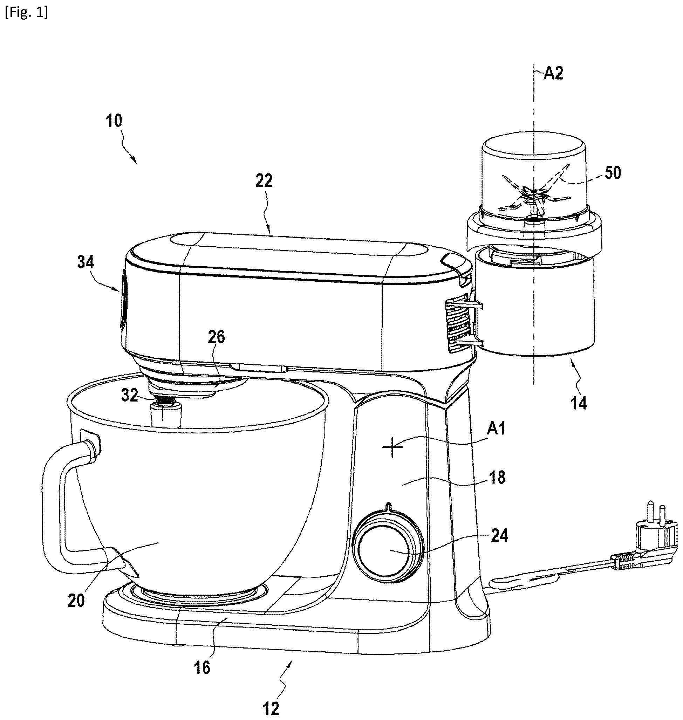

La **Fig. 1** représente un mode de réalisation d'un système électroménager de préparation culinaire **10** comprenant d'une part un appareil électroménager de préparation culinaire **12**, de type robot pâtissier, et un ensemble accessoire **14**, ici de type « mini-hachoir ».

L'appareil électroménager de préparation culinaire **12** comprend un socle, ici en forme de pied, comportant une embase **16** sensiblement horizontale et un jambage **18** qui s'étend verticalement vers le haut depuis l'embase **16**. Le socle est destiné à reposer sur un plan de travail horizontal. L'embase **16** peut aussi supporter un récipient de travail principal, ici sous la forme d'une cuve **20**, généralement amovible. L'appareil électroménager de préparation culinaire **12** comprend aussi une tête **22** qui, dans cet exemple, est articulée sur le socle autour d'un axe horizontal **A1**, ici à l'extrémité supérieure du jambage **18**. Dans les cas où la tête **22** est articulée autour de l'axe horizontal **A1**, elle peut être mobile entre une position relevée, non représentée, dans laquelle la cuve **20** peut être facilement retirée de l'embase **16**, et une position de travail, illustrée notamment sur la **Fig. 1**. Les notions de « horizontal », « vertical », « haut » et « bas », et les notions d'orientations qui en découlent, se réfèrent à des orientations normales de l'appareil électroménager de préparation culinaire **12** en situation de fonctionnement lorsque son socle est posé sur un plan de travail horizontal.

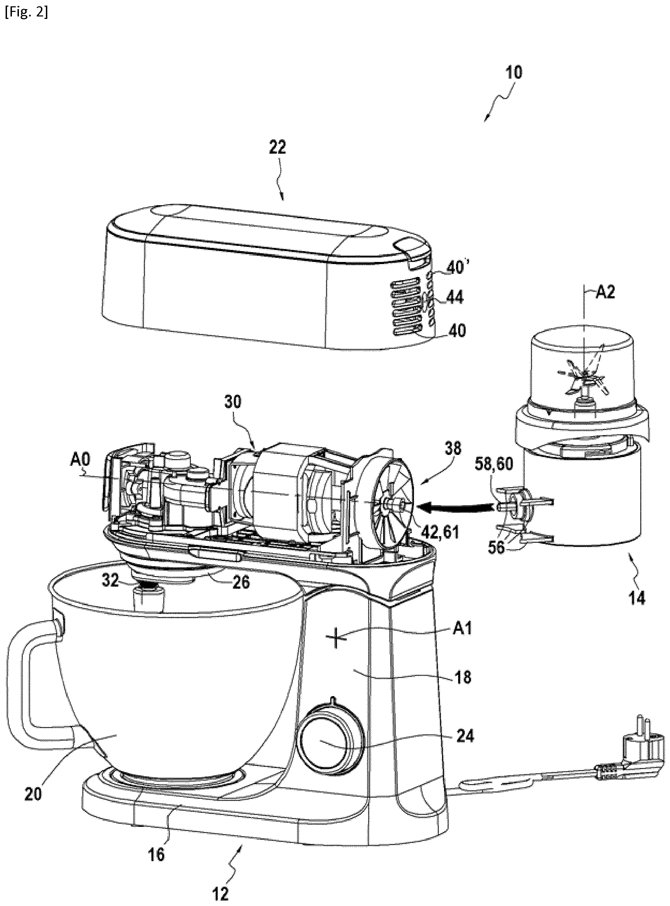

La tête **22** de l'appareil électroménager de préparation culinaire **12** présente une forme qui s'étend selon une direction longitudinale, horizontale en position de travail, avec une portion longitudinale arrière par laquelle elle est liée au socle, et une partie longitudinale avant qui s'étend en surplomb au-dessus de l'embase **16** et de la cuve **20.** La tête **22** renferme un moteur principal **30**, de préférence un moteur électrique, illustré sur la **Fig. 2**, dont la mise en marche et la vitesse peuvent être contrôlées par exemple par un bouton de commande **24** disposé par exemple sur une face latérale du jambage **18**. La cuve **20** est par exemple montée de manière amovible sur l'embase **16** par une liaison à baïonnette.

De manière connue en soi, la portion longitudinale avant de la tête **22** comporte une platine principale **26** inférieure comprenant des moyens pour l'entraînement d'un outil de travail principal **32**, de préférence selon un mouvement planétaire. À cet effet, la platine principale **26** est mobile en rotation autour d'un axe central, et comporte un arbre d'entraînement rotatif excentré par rapport à l'axe central et assurant l'entraînement en rotation d'un outil de travail principal **32** sur lui-même. Cet ensemble rotatif est relié au moteur principal **30** par l'intermédiaire d'une chaîne cinématique qui met généralement en oeuvre un train d'engrenage épicycloïdal selon une conception très largement connue de l'homme du métier. L'outil de travail principal **32**, porté et entraîné par la platine principale **26**, est, en position de travail, engagé à l'intérieur de la cuve **20** pour agir sur des aliments contenus dans la cuve **20**. L'outil de travail principal **32** est par exemple un outil pétrisseur.

Le moteur principal **30** agencé à l'intérieur de la tête **22** comporte un arbre moteur orienté selon un axe moteur **A0** horizontal. Cet arbre moteur peut comporter une extrémité avant reliée à la chaine cinématique d'entrainement de la platine principale **26.**

L'appareil électroménager de préparation culinaire **12** comporte au moins une sortie auxiliaire **38** comprenant une griffe d'accrochage d'appareil **40** et un arbre de sortie auxiliaire **42** qui est entraîné en rotation par le moteur principal **30** de la tête **22**, configurée pour l'accrochage et l'entraînement d'un ensemble accessoire amovible.

Au sens de l'invention, deux éléments sont liés de manière amovible s'ils peuvent être accouplés et désaccouplés, ou accrochés et décrochés, de manière simple par un utilisateur final d'un système électroménager de préparation culinaire selon l'invention, c'est-à-dire par un utilisateur final d'appareils électroménagers de préparation culinaire. De préférence, ces opérations pourront se faire sans outil, ou alors avec l'aide d'un ou plusieurs outil(s) selon un mode opératoire très simple. Le mode opératoire pour accoupler et désaccoupler, et/ou pour accrocher et décrocher deux éléments liés de manière amovible comporte de préférence un unique geste, par exemple pousser ou tirer ou tourner ou visser, etc., ou une combinaison de deux gestes tels que pousser-tourner, tirer-visser, pousser-visser, etc. Une liaison amovible sera ainsi à distinguer d'une liaison démontable, une liaison démontable étant prévue par exemple pour permettre des opérations de maintenance ou de réparation sur des organes internes d'un appareil électroménager de préparation culinaire, nécessitant généralement des outils et nécessitant généralement plusieurs opérations successives pour permettre un démontage, et étant réservée par exemple à un réparateur, en dehors d'une utilisation habituelle de l'appareil électroménager de préparation culinaire.

Dans l'exemple illustré, la sortie auxiliaire **38** est agencée à l'extrémité arrière de la tête **22**. Ainsi la sortie auxiliaire **38** est une sortie auxiliaire arrière. L'arbre de sortie auxiliaire **42** est un arbre de sortie auxiliaire arrière. La griffe d'accrochage d'appareil **40** de la sortie auxiliaire **38** est formée par une série de lumières **40'** aménagées dans une paroi de carter de l'extrémité arrière de la tête **22.** L'arbre de sortie auxiliaire **42** peut être formé par l'extrémité arrière de l'arbre moteur, ou par un arbre distinct entraîné par le moteur principal **30.** Tel que représenté sur les figures 1 à 4, l'arbre de sortie auxiliaire **42** est formé par une extrémité arrière de l'arbre moteur. L'arbre de sortie auxiliaire **42** présente un moyen d'accouplement, ou coupleur, qui peut par exemple être un carré d'entraînement, dans l'exemple un carré femelle **61**, le moyen d'accouplement étant accessible depuis l'extérieur de la tête **22** au travers d'un orifice d'accès **44** aménagé dans la paroi de carter de la tête **22.** Dans tous les cas, on remarque que l'arbre de sortie auxiliaire **42** de la sortie auxiliaire **38** de l'appareil électroménager de préparation culinaire **12** est parallèle à l'axe moteur **A0.**

Si désiré, la chaine cinématique d'entrainement de la platine principale **26** peut par ailleurs entraîner en rotation un arbre de sortie auxiliaire avant d'une autre sortie auxiliaire **34** avant, agencée sur l'extrémité avant de la tête **22**.

Dans l'exemple illustré, l'arbre de sortie auxiliaire **42** est entraîné en rotation par le moteur principal **30** de la tête **22** à une vitesse de sortie auxiliaire égale à la vitesse moteur de l'arbre moteur. Cependant, de manière générale, on peut prévoir que l'arbre de sortie auxiliaire **42** soit entraîné en rotation, par le moteur principal **30** de la tête **22**, à une vitesse de sortie auxiliaire comprise entre 0,1 et 10 fois la vitesse moteur de l'arbre moteur, de préférence comprise entre 1,1 et 10 fois la vitesse moteur de l'arbre moteur.

Le système électroménager de préparation culinaire **10** comporte par ailleurs au moins un ensemble accessoire **14** amovible, notamment de type mini-hachoir comme illustré, encore de type blender, prévu pour être accroché à l'appareil électroménager de préparation culinaire **12** et pour être motorisé au moyen de la sortie auxiliaire **38**. De manière générique, un tel ensemble accessoire **14** comporte tout d'abord une enceinte refermable **45** délimitant un espace interne fermé destiné à accueillir des aliments à préparer. Dans l'exemple illustré, cette enceinte refermable **45** est délimitée d'une part par un réceptacle, formé par une embase porte-outil **46** et par une jupe **47**, et d'autre part par une cloche **48** qui vient se raccorder sur l'embase porte-outil **46** pour refermer l'enceinte refermable **45**. La jupe **47** s'étend vers le haut autour d'un axe d'outil **A2** depuis l'embase porte-outil **46.** L'embase porte-outil **46** est par exemple de géométrie sensiblement circulaire autour de l'axe d'outil **A2.** La jupe **47** peut présenter une géométrie cylindrique. La cloche **48** présente une paroi supérieure sensiblement transversale et une paroi latérale venant entourer la jupe **47.** Si désiré la paroi latérale de la cloche 48 peut être cylindrique de révolution autour de l'axe d'outil **A2** qui s'étend vers le bas depuis la périphérie de la paroi supérieure. La paroi latérale cylindrique de la cloche **48** vient alors entourer co-axialement par l'extérieur la jupe **47,** qui est cylindrique. Le bord inférieur de la cloche **48** est pourvu d'un moyen de liaison avec l'embase porte-outil **46**, avec par exemple des filetages complémentaires sur l'embase porte-outil **46** et sur le bord inférieur de la cloche **48**, ou encore, en variante, avec une liaison à baïonnette, permettant d'assembler de manière amovible la cloche **48** à l'embase porte-outil **46** pour délimiter un espace interne fermé, de préférence étanche.

L'ensemble accessoire amovible comporte un outil coupant **50**, rotatif autour de l'axe d'outil **A2**, qui peut être qualifié d'axe de travail pour l'outil coupant **50**. L'outil coupant **50** est contenu dans l'espace interne fermé lorsque, dans l'exemple, la cloche **48** est assemblée sur l'embase porte-outil **46**. L'outil coupant **50** est agencé dans l'ensemble accessoire **14** de manière que l'axe d'outil **A2** est agencé axialement au centre de l'espace interne fermé délimité par l'enceinte refermable **45** de l'ensemble accessoire **14** en configuration fermée. L'outil coupant **50** présente un moyeu central **52** et au moins une lame coupante **54** s'étendant radialement par rapport à l'axe d'outil **A2** depuis le moyeu central **52**. L'outil coupant **50** présente de préférence au moins deux lames coupantes **54** s'étendant selon des directions radiales opposées de part et d'autre de l'axe d'outil **A2.** Dans l'exemple, l'outil coupant **50** comporte six lames coupantes **54** qui s'étendent radialement depuis le moyeu central **52**, réparties uniformément autour de l'axe d'outil **A2**. En vue de dessus selon l'axe d'outil **A2**, les lames coupantes **54** selon l'exemple sont orientées de manière sensiblement rectiligne selon la direction radiale, mais il est connu qu'elles peuvent présenter, selon une telle vue de dessus, une angulation ou une courbure par rapport à un rayon issu de l'axe d'outil **A2**. De même, on note dans l'exemple que, dans un plan contenant l'axe d'outil **A2**, les lames coupantes **54** présentent une angulation ou une courbure, vers le haut ou vers le bas, par rapport à une direction perpendiculaire à l'axe d'outil **A2**. L'outil coupant **50** est, dans l'exemple, solidaire de l'embase porte-outil **46**. Dans certains modes de réalisation, l'outil coupant **50** peut être solidaire de l'embase porte-outil **46** de manière amovible, par exemple par encliquetage sur un coupleur monté à rotation sur l'embase porte-outil **46**.

On verra plus dans le détail plus loin que l'ensemble accessoire **14** comporte dans tous les cas d'une part une griffe d'accrochage d'ensemble accessoire **56** pour permettre l'accrochage amovible de l'ensemble accessoire **14** sur l'appareil électroménager de préparation culinaire **12**, et d'autre part un arbre d'entrée rotatif **58** ayant un coupleur **60** pour s'accoupler mécaniquement avec l'arbre de sortie auxiliaire **42** de la sortie auxiliaire **38.** Ainsi l'arbre de sortie auxiliaire **42** est accouplé mécaniquement avec l'arbre d'entrée rotatif **58.** Le coupleur **60** doit permettre un accouplement et un désaccouplement faciles, de préférence sans outil. Dans les exemples illustrés, la griffe d'accrochage d'ensemble accessoire **56** comprend une série de pattes d'accrochage qui s'étendent depuis un boîtier de l'ensemble accessoire **14** et qui sont destinées à s'engager dans les lumières **40'** de l'extrémité arrière de la tête **22** pour assurer l'accrochage de l'ensemble accessoire **14** sur l'appareil électroménager de préparation culinaire **12.** Ainsi la griffe d'accrochage d'ensemble accessoire **56** coopère avec la griffe d'accrochage d'appareil **40.** Les lames ménageant les lumières **40'** peuvent comporter des moyens d'encliquetage ou d'emboîtement élastique. Bien entendu, la griffe d'accrochage d'ensemble accessoire **56** pourrait prendre une autre forme, par exemple la forme d'un accrochage à baïonnette, la forme d'un ou plusieurs crochets d'accrochage, la forme d'un pas de vis, etc.... De même, comme dans les exemples illustrés, le coupleur **60** de l'arbre d'entrée rotatif **58**, qui assure le couplage en rotation avec l'arbre de sortie auxiliaire **42**, peut par exemple présenter une forme complémentaire de celle d'un coupleur de l'arbre de sortie intermédiaire, avec par exemple un carré mâle et un carré femelle complémentaires l'un de l'autre, ou encore tout autre accouplement mécanique permettant de transmettre un couple en rotation. De préférence, le coupleur **60** permet cet accouplement par simple engagement de formes complémentaires, sans nécessiter d'intervention avec un outil. Dans cet exemple, la griffe d'accrochage d'ensemble accessoire **56** et le coupleur **60** sont clairement séparés l'un de l'autre. Cependant, on pourrait prévoir que ces deux éléments, et les deux fonctions qu'ils assurent, soient réalisés par un même jeu de pièces complémentaires.

L'ensemble accessoire **14** est donc configuré pour être accroché sur la sortie auxiliaire **38** dont l'axe de l'arbre de sortie auxiliaire **42** est horizontal. L'arbre de sortie auxiliaire **42** doit entraîner l'outil coupant **50** qui est rotatif autour de l'axe d'outil **A2** qui est vertical. De ce fait, le système électroménager de préparation culinaire **10** comporte une transmission mécanique à renvoi d'angle **62** agencée entre le moteur principal **30** de l'appareil électroménager de préparation culinaire **12** et l'outil coupant **50** de l'ensemble accessoire **14.** Selon un aspect de l'invention, cette transmission mécanique à renvoi d'angle **62** n'est pas intégrée à l'intérieur de l'appareil électroménager de préparation culinaire **12**, et n'est en particulier pas intégrée entre le moteur principal **30** et l'arbre de sortie auxiliaire **42** de la sortie auxiliaire **38.** Au contraire, cette transmission mécanique à renvoi d'angle **62** fait partie de l'ensemble accessoire **14**. Plus précisément, la transmission mécanique à renvoi d'angle **62** est comprise dans l'ensemble accessoire **14** en étant agencée entre un arbre d'entrée de l'ensemble accessoire **14** et l'outil coupant **50**.

L'invention peut être mise en oeuvre selon deux familles principales de réalisation.

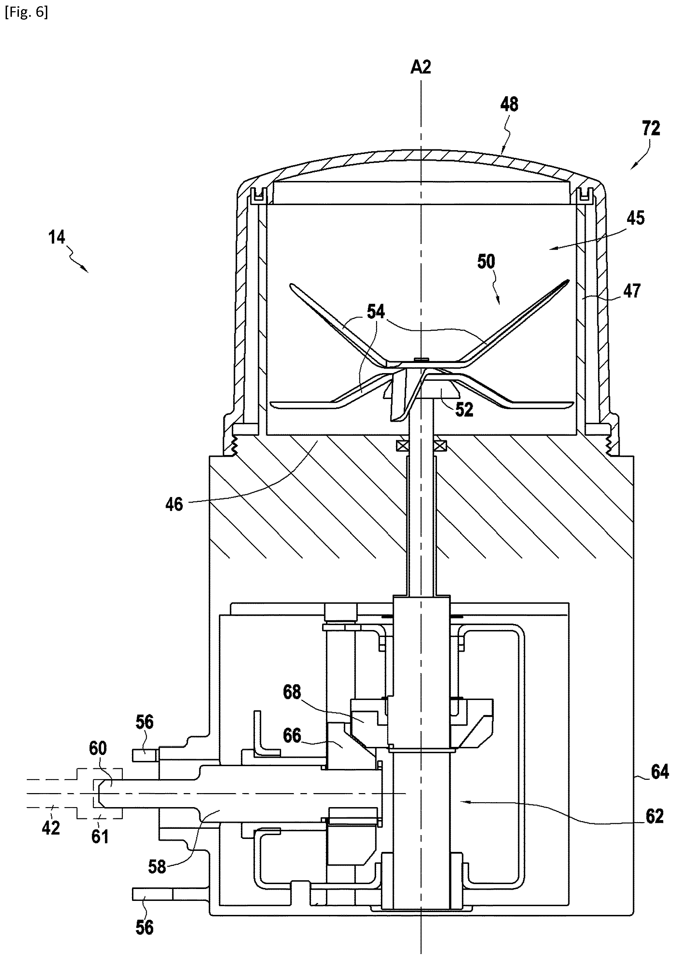

Dans une première famille, illustrée schématiquement sur la **Fig. 6**, l'ensemble accessoire **14** est un ensemble intégré dans lequel une paroi inférieure de l'enceinte refermable **45**, ici par exemple l'embase porte-outil **46**, est liée de manière non amovible à un boitier **64** qui enferme la transmission mécanique à renvoi d'angle **62.**

Dans une seconde famille, illustrée schématiquement sur les **Figs. 1** à **5**, l'ensemble accessoire **14** comporte un porte-accessoire **70** et un accessoire **72** liés de manière amovible, dans lequel la transmission mécanique à renvoi d'angle **62** est intégrée au porte-accessoire **70** et dans lequel l'enceinte refermable **45** fait partie, avec l'outil coupant **50**, de l'accessoire **72.** Dans les deux cas la transmission mécanique à renvoi d'angle **62** peut être avantageusement reçue à l'intérieur d'un boîtier **64.**

Dans les exemples illustrés, la transmission mécanique à renvoi d'angle **62** comporte une première roue dentée **66**, par exemple à denture conique, qui est montée à rotation dans le boîtier **64** autour d'un axe horizontal, lequel est par exemple aligné avec l'axe moteur **A0** du moteur principal **30**, et qui engrène avec une deuxième roue dentée **68**, par exemple à denture conique, qui est montée à rotation dans le boîtier **64** autour d'un axe vertical, par exemple aligné avec l'axe d'outil **A2** de l'outil coupant **50**, perpendiculaire à l'axe horizontal de la première roue dentée **66.**

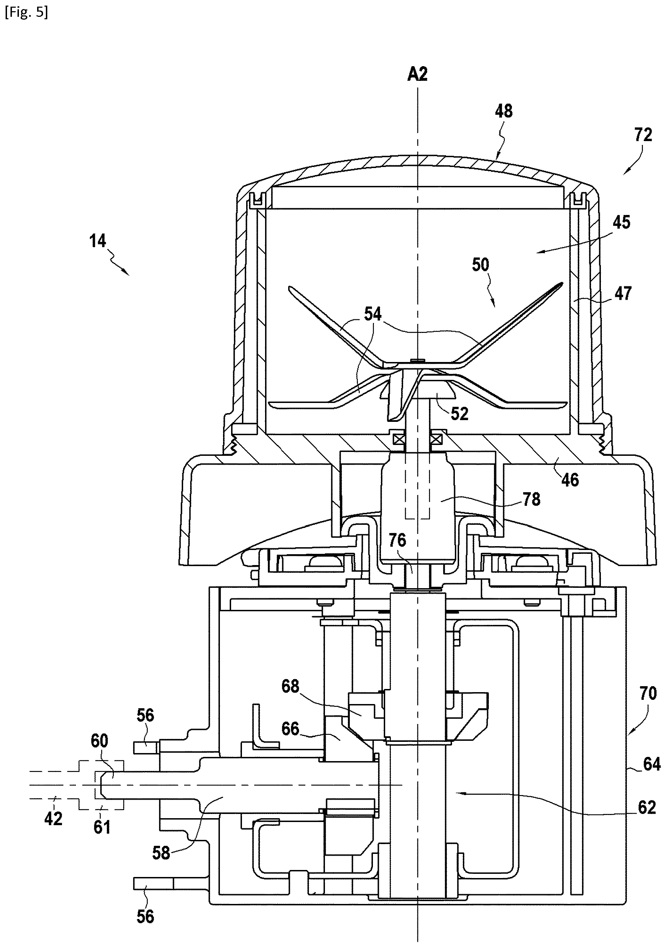

Dans le cas de la seconde famille de réalisation, avec un porte-accessoire **70** et un accessoire **72** séparés, le porte-accessoire **70** comporte une première griffe d'accrochage complémentaire de la griffe d'accrochage d'appareil **40** de la sortie auxiliaire **38** de l'appareil électroménager de préparation culinaire **12** pour permettre l'accrochage du porte-accessoire **70** sur l'appareil électroménager de préparation culinaire **12.** Dans l'exemple illustré, la première griffe d'accrochage correspond à la griffe d'accrochage d'ensemble accessoire **56** comportant les pattes d'accrochage qui s'étendent depuis le boîtier **64** du porte-accessoire **70.** Le porte-accessoire **70** comporte encore l'arbre d'entrée rotatif **58**, qui est configuré pour s'accoupler mécaniquement avec l'arbre de sortie auxiliaire **42** de la sortie auxiliaire **38**, et qui est relié mécaniquement directement ou indirectement à la première roue dentée **66** de la transmission mécanique à renvoi d'angle **62.** Tel que bien visible sur les figures 5 et 6, l'arbre d'entrée rotatif **58** est relié mécaniquement directement à la première roue dentée **66** de la transmission mécanique à renvoi d'angle **62.**

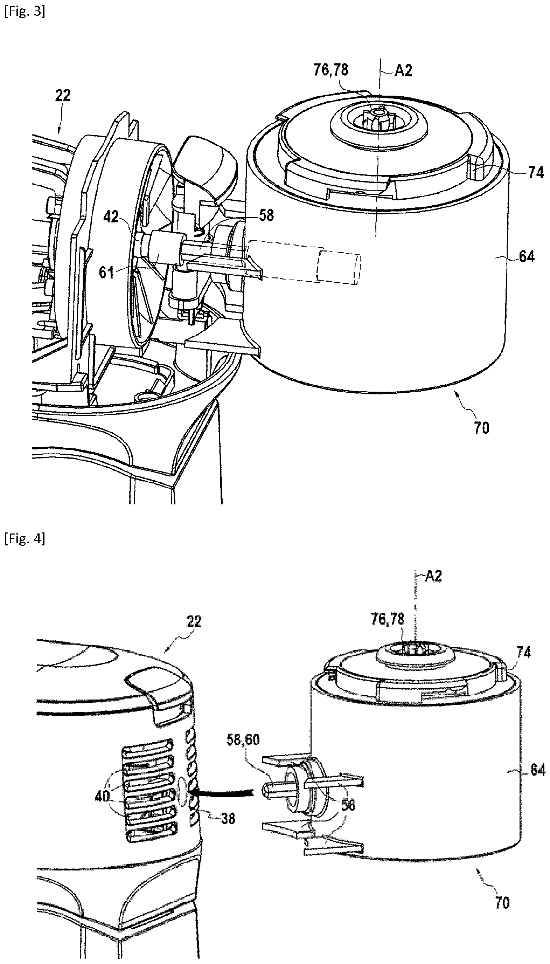

Dans le cas de la seconde famille de réalisation, avec un porte-accessoire **70** et un accessoire **72** séparés, le porte-accessoire **70** comporte une seconde griffe d'accrochage **74** configurée pour permettre l'accrochage de l'accessoire **72.** Cette seconde griffe d'accrochage **74** peut présenter la forme d'un accrochage par baïonnette, tel qu'illustré aux **Figs. 3** et **4**, ou toute autre forme permettant l'accrochage, de préférence sans outil, ou alors avec un outil très simple, de l'accessoire **72** sur le porte-accessoire **70.** Dans ce cas, l'accessoire **72**, par exemple son embase porte-outil **46**, présente, de préférence sur une face inférieure tournée vers le porte-accessoire **70**, une troisième griffe d'accrochage complémentaire de la seconde griffe d'accrochage **74.**

Dans le cas de la seconde famille de réalisation, avec un porte-accessoire **70** et un accessoire **72** séparés, le porte-accessoire **70** comporte un arbre de sortie rotatif **76** comprenant un coupleur **78** configuré pour permettre l'entrainement en rotation de l'outil coupant **50** de l'accessoire **72** accroché sur la seconde griffe d'accrochage **74.** Dans l'exemple illustré, le coupleur **78** est entraîné en rotation autour de l'axe d'outil **A2** par la deuxième roue dentée **68** de la transmission mécanique à renvoi d'angle **62.** Ce coupleur **78** doit permettre un accouplement et un désaccouplement faciles, de préférence sans outil. La transmission mécanique à renvoi d'angle **62** est donc agencée entre l'arbre d'entrée rotatif et l'arbre de sortie rotatif **76** du porte-accessoire **70.**

On remarque que l'arbre d'entrée rotatif **58** du porte-accessoire **70** et la griffe d'accrochage d'ensemble accessoire **56** du porte-accessoire **70** sont agencés sur une même première face du porte-accessoire **70** qui est configurée pour être tournée en regard de, et faire face à l'extrémité arrière de la tête **22** de l'appareil électroménager de préparation culinaire **12.** En revanche, la griffe d'accrochage d'ensemble accessoire **56** du porte-accessoire **70** est agencée sur une première face du porte-accessoire **70**, tandis que la seconde griffe d'accrochage **74** du porte-accessoire **70** est agencée sur une seconde face du porte-accessoire **70**, la seconde face étant distincte de la première face et présentant une orientation distincte de celle de la première face. Dans l'exemple, la première face et la seconde face du porte-accessoire **70** sont des faces perpendiculaires l'une par rapport à l'autre. Ce sont des faces externes du boîtier **64** dans lequel est agencée la transmission mécanique à renvoi d'angle **62,** ces faces définissant entre elles une géométrie convexe.

On remarque encore que, dans l'exemple illustré, l'arbre de sortie rotatif **76** du porte-accessoire **70** est agencé au centre de la seconde griffe d'accrochage **74** du porte-accessoire **70.**

Dans certains modes de réalisation, que l'ensemble accessoire **14** soit intégré ou qu'il soit réalisé en deux parties séparées sous la forme d'un porte-accessoire **70** et d'un accessoire **72,** la transmission mécanique à renvoi d'angle **62** peut être configurée pour ne pas modifier la vitesse angulaire de rotation entre l'arbre d'entrée rotatif **58** de l'ensemble accessoire **14** et l'outil coupant **50.** A contrario, on peut avantageusement prévoir que la transmission mécanique agencée entre l'arbre d'entrée rotatif **58** et l'outil coupant **50** de l'ensemble accessoire **14** soit configurée pour multiplier une vitesse angulaire d'entrée de l'arbre d'entrée rotatif **58** en une vitesse angulaire de travail de l'outil coupant **50** par un rapport de multiplication de vitesses strictement supérieur à 1, pour obtenir une valeur supérieure de la vitesse angulaire de rotation de l'outil coupant **50** pour un valeur donnée de la vitesse angulaire de rotation du moteur principal **30.** Ce rapport de multiplication de vitesses peut par exemple être compris entre 1,1 et 1,4. Cependant, par exemple en cas d'utilisation d'un moteur principal **30** à haute vitesse, la transmission mécanique à renvoi d'angle **62** peut être configurée pour multiplier une vitesse angulaire d'entrée de l'arbre d'entrée rotatif **58** en une vitesse angulaire de travail de l'outil coupant **50** par un rapport de multiplication de vitesses strictement inférieur à 1, par exemple compris entre 0,1 et 0,9. Dans un mode de réalisation comprenant un couple de roues dentées à engrenages coniques, le rapport de multiplication peut être obtenu par une différence des dimensions et du nombre de dents de ces deux roues dentées. Cependant, dans tous les cas, la transmission mécanique à renvoi d'angle **62** peut comporter par ailleurs, en plus des moyens de renvoi d'angle, un multiplicateur de vitesse, par exemple sous la forme de deux roues d'engrenage de diamètre différent.

Les modes de réalisation de l'invention dans lesquels l'ensemble accessoire **14** est un ensemble intégré, incluant de manière non séparable la partie accessoire et la partie formant la transmission mécanique à renvoi d'angle **62**, présentent l'avantage de pouvoir s'accrocher sur une sortie auxiliaire comportant un arbre de sortie auxiliaire horizontal, notamment sur la sortie auxiliaire **38**, mais aussi sur une autre sortie auxiliaire telle que par exemple l'autre sortie auxiliaire **34** avant, voire une autre sortie auxiliaire latérale, tout en conservant un axe d'outil **A2** vertical pour l'outil coupant **50**, ce qui est nécessaire au bon fonctionnement d'un accessoire de type « blender » ou de type « mini-hachoir ». On retrouve le même avantage dans les modes de réalisation dans lesquels l'ensemble accessoire **14** comporte deux parties séparées, l'une comprenant l'accessoire **72** et l'autre comprenant un porte-accessoire **70** muni de la transmission mécanique à renvoi d'angle **62**, les deux parties étant liées de manière amovible. Dans les deux cas, le système électroménager de préparation culinaire **10** n'entraîne la transmission mécanique renvoi d'angle **62** que lorsque celle-ci est nécessaire, c'est-à-dire uniquement lorsque on utilise l'ensemble accessoire **14**. Lorsque l'appareil électroménager de préparation culinaire **12** est utilisé pour sa fonction principale, dans laquelle un outil de travail principal **32** est entraîné par la platine principale **26** pour agir sur des aliments contenus dans la cuve **20**, l'ensemble accessoire **14** peut être décroché de l'appareil électroménager de préparation culinaire **12**, empêchant tout entraînement de la transmission mécanique à renvoi d'angle **62**, ce qui diminue le bruit global généré par l'appareil électroménager de préparation culinaire **12**, et ce qui diminue l'usure de la transmission mécanique à renvoi d'angle **62.**

Dans les modes de réalisation dans lesquels l'ensemble accessoire **14** comporte deux parties séparées liées de manière amovible, un même porte-accessoire **70** peut être prévu pour être utilisé avec deux ou plus accessoires **72** distincts, qu'ils soient de même type, par exemple au moins deux accessoires de type mini-hachoir, ou qu'ils soient de types différents, par exemple au moins un accessoire de type mini-hachoir et au moins un accessoire de type « blender ». Ainsi, un système électroménager de préparation culinaire **10** selon l'invention peut comporter un premier accessoire et un second accessoire, tous deux configurés pour être accrochés de manière alternative sur la seconde griffe d'accrochage **74** du porte-accessoire **70.** Chacun des deux accessoires comporte un outil coupant **50** de travail destiné à être entraîné par l'arbre de sortie du porte-accessoire **70** lorsque l'accessoire correspondant est accroché sur la seconde griffe d'accrochage **74** du porte-accessoire **70.** On comprend donc dans ce cas que le système électroménager de préparation culinaire **10** selon l'invention présente le grand avantage de fournir, pour un appareil électroménager de préparation culinaire **12** unique, plusieurs accessoires distincts, de types différents ou non, et un seul porte-accessoire **70** comprenant une transmission mécanique à renvoi d'angle **62** compatible avec l'appareil électroménager de préparation culinaire **12** et avec ces accessoires distincts. Cela permet bien entendu de limiter le coût et l'encombrement global du système électroménager de préparation culinaire **10.** Bien entendu, le porte-accessoire **70** étant amovible, on conserve les avantages mentionnés ci-dessus liés notamment à la réduction du bruit de l'appareil électroménager de préparation culinaire **12** lorsque l'entraînement du porte-accessoire **70** à transmission mécanique à renvoi d'angle **62** n'est pas nécessaire.

Dans les modes de réalisation dans lesquels la transmission mécanique à renvoi d'angle **62** est intégrée de manière inamovible à l'ensemble accessoire **14**, on peut donc considérer que l'ensemble accessoire **14** en tant que tel comporte une transmission mécanique à renvoi d'angle **62** agencée entre l'arbre d'entrée rotatif **58** de l'ensemble accessoire **14** et un outil coupant **50** de l'ensemble accessoire **14**. Par exemple, comme illustré à la **Fig. 6**, la deuxième roue dentée **68** à denture conique présente un arbre qui s'étend vers le haut selon l'axe d'outil **A2**, au travers de l'embase porte-outil **46**, et qui porte à son extrémité l'outil coupant **50**, directement comme illustré à la **Fig. 6**, ou indirectement par l'intermédiaire d'un coupleur.

## Revendications

1. Système électroménager de préparation culinaire (**10**), du type comprenant :
- un appareil électroménager de préparation culinaire (**12**) comportant :
• un socle présentant une embase (**16)** configurée pour recevoir une cuve (**20**),
• une tête (**22**) liée au socle, la tête (**22**) ayant
◊ un moteur principal (**30**) agencé à l'intérieur de la tête (**22**) et ayant un arbre moteur orienté selon un axe moteur (**A0**) horizontal,
◊ une platine principale (**26**) agencée sous la tête (**22**), entraînée en rotation par le moteur principal (**30**), et configurée pour entraîner un outil de travail principal (**32**) au-dessus de l'embase (**16**) selon un mouvement de travail principal,
◊ une sortie auxiliaire (**38**) comprenant une griffe d'accrochage d'appareil (**40**) et un arbre de sortie auxiliaire (**42**) qui est entraîné en rotation par le moteur principal (**30**) de la tête (**22**),
le système électroménager de préparation culinaire (**10**) comportant par ailleurs un ensemble accessoire (**14**) amovible ayant :
- une enceinte refermable (**45**) délimitant un espace interne fermé destiné à accueillir des aliments à préparer,
- un outil coupant (**50**), rotatif autour d'un axe d'outil (**A2**) vertical, l'outil coupant (**50**) étant contenu dans l'espace interne fermé et présentant un moyeu central (**52**) avec au moins une lame coupante (**54**) s'étendant radialement par rapport à l'axe d'outil (**A2**) depuis le moyeu central (**52**),
- une griffe d'accrochage d'ensemble accessoire (**56**) pour permettre l'accrochage amovible de l'ensemble accessoire (**14**) sur l'appareil électroménager de préparation culinaire (**12**),
- un arbre d'entrée rotatif (**58**) ayant un coupleur (**60**) pour s'accoupler mécaniquement avec l'arbre de sortie auxiliaire (**42**), et le système électroménager de préparation culinaire (**10**) comporte une transmission mécanique à renvoi d'angle (**62**) agencée entre le moteur principal (**30**) et l'outil coupant (**50**) de l'ensemble accessoire (**14**), l'arbre de sortie auxiliaire (**42**) de l'appareil électroménager de préparation culinaire (**12**) étant parallèle à l'axe moteur (**A0**), la transmission mécanique à renvoi d'angle (**62**) étant comprise dans l'ensemble accessoire (**14**) en étant agencée entre l'arbre d'entrée rotatif (**58**) de l'ensemble accessoire (**14**) et l'outil coupant (50), système électroménager de préparation culinaire dans lequel l'arbre de sortie auxiliaire est accouplé mécaniquement avec l'arbre d'entrée rotatif, et dans lequel l'arbre d'entrée rotatif est relié mécaniquement directement à une première roue dentée de la transmission mécanique à renvoi d'angle
**caractérisé en ce que** l'arbre de sortie auxiliaire (**42**) est un arbre de sortie auxiliaire arrière, **en ce que** l'arbre de sortie auxiliaire (**42**) est formé par une extrémité arrière de l'arbre moteur.

2. Système électroménager de préparation culinaire (**10**) selon la revendication **1**, **caractérisé en ce que** la transmission mécanique à renvoi d'angle (**62**) est configurée pour multiplier une vitesse angulaire d'entrée de l'arbre d'entrée rotatif (**58**) en une vitesse angulaire de travail de l'outil coupant (**50**) par un rapport de multiplication de vitesses strictement supérieur à 1, de préférence compris entre 1,1 et 1,4.

3. Système électroménager de préparation culinaire (**10**) selon la revendication **1**, **caractérisé en ce que** la transmission mécanique à renvoi d'angle (**62**) est configurée pour multiplier une vitesse angulaire d'entrée de l'arbre d'entrée rotatif (**58**) en une vitesse angulaire de travail de l'outil coupant (**50**) par un rapport de multiplication de vitesses strictement inférieur à 1, de préférence compris entre 0,1 et 0,9.

4. Système électroménager de préparation culinaire (**10**) selon l'une des revendications **1** à **3**, **caractérisé en ce que** l'arbre de sortie auxiliaire (**42**) est entraîné en rotation par le moteur principal (**30**) de la tête (**22**) à une vitesse de sortie auxiliaire égale à la vitesse angulaire moteur de l'arbre moteur.

5. Système électroménager de préparation culinaire selon l'une des revendications **1** à **4**, **caractérisé en ce que** la tête (**22**) présente un carter ayant un allongement selon la direction de l'arbre moteur, entre une extrémité arrière par laquelle la tête (**22**) est liée au socle et une extrémité avant en porte-à-faux au-dessus de l'embase (**16)**, et **en ce que** la sortie auxiliaire (**38**) est une sortie auxiliaire arrière agencée sur une face arrière de l'extrémité arrière de la tête (**22**).

6. Système électroménager de préparation culinaire (**10**) selon l'une des revendications **1** à **5**, **caractérisé en ce que** l'arbre d'entrée rotatif (**58**) de l'ensemble accessoire (**14**) amovible et l'axe d'outil (**A2**) de l'outil coupant (**50**) sont perpendiculaires et **en ce que** la transmission mécanique à renvoi d'angle (**62**) comporte un renvoi d'angle à 90°.

7. Système électroménager de préparation culinaire (**10**) selon l'une des revendications **1** à **6**, **caractérisé en ce que** l'ensemble accessoire (**14**) est un ensemble intégré dans lequel une embase porte-outil (**46**) de l'enceinte refermable (**45**) est liée de manière non amovible à un boitier (**64**) qui contient la transmission mécanique à renvoi d'angle (**62**).

8. Système électroménager de préparation culinaire (**10**) selon l'une quelconque des revendications **1** à **6**, **caractérisé en ce que** l'ensemble accessoire (**14**) comporte un porte-accessoire (**70**) et un accessoire (**72**) liés de manière amovible, dans lequel la transmission mécanique à renvoi d'angle (**62**) est intégrée au porte-accessoire (**70**) et dans lequel l'enceinte refermable (**45**) fait partie de l'accessoire (**72**).

9. Système électroménager de préparation culinaire (**10**) selon la revendication **8**, **caractérisé en ce que** le porte-accessoire (**70**) comporte :
- la griffe d'accrochage d'ensemble accessoire (**56**) complémentaire de la griffe d'accrochage d'appareil (**40**) de la sortie auxiliaire (**38**) de l'appareil électroménager de préparation culinaire (**12**) pour permettre l'accrochage du porte-accessoire (**70**) sur l'appareil électroménager de préparation culinaire (**12**),
- un arbre d'entrée rotatif (**58**) configuré pour être accouplé mécaniquement avec l'arbre de sortie auxiliaire (**42**),
- une seconde griffe d'accrochage (**74**) configurée pour permettre l'accrochage de l'accessoire (**72**),
- un arbre de sortie rotatif (**76**) configuré pour permettre l'entrainement en rotation de l'outil coupant (**50**) de l'accessoire (**72**) accroché sur la seconde griffe d'accrochage (**74**),
et **en ce que** la transmission mécanique à renvoi d'angle (**62**) est agencée entre l'arbre d'entrée rotatif (5**8**) et l'arbre de sortie rotatif (**76**) du porte-accessoire (**70**).

10. Système électroménager de préparation culinaire (**10**) selon la revendication **9**, **caractérisé en ce que** l'arbre d'entrée rotatif (**58**) du porte-accessoire (**70**) et la griffe d'accrochage d'ensemble accessoire (**56**) du porte-accessoire (**70**) sont agencés sur une même première face du porte-accessoire (**70**).

11. Système électroménager de préparation culinaire (**10**) selon l'une des revendications **9** ou **10, caractérisé en ce que** l'arbre de sortie rotatif (**76**) du porte-accessoire (**70**) est agencé au centre de la seconde griffe d'accrochage (**74**) du porte-accessoire (**70**).

12. Système électroménager de préparation culinaire (**10**) selon l'une des revendications **9** à **11**, **caractérisé en ce que** la griffe d'accrochage d'ensemble accessoire (**56**) du porte-accessoire (**70**) est agencée sur une première face du porte-accessoire (**70**), et **en ce que** la seconde griffe d'accrochage (**74**) du porte-accessoire (**70**) est agencée sur une seconde face du porte-accessoire (**70**), la seconde face étant distincte de la première face et présentant une orientation distincte de celle de la première face.

13. Système électroménager de préparation culinaire (**10**) selon l'une des revendications **9** à **12**, **caractérisé en ce qu'**il comporte un premier accessoire et un second accessoire, tous deux configurés pour être accrochés de manière alternative sur la seconde griffe d'accrochage (**74**) du porte-accessoire (**70**).

## Patentansprüche

1. Elektrisches Haushaltsküchen-Zubereitungssystem (10), in der Art Folgendes umfassend:
- eine elektrische Haushaltsküchen-Zubereitungseinrichtung (12), umfassend:
- einen Sockel, der eine Basis (16) aufweist, die konfiguriert ist, um einen Behälter (20) aufzunehmen,
- einen mit dem Sockel verbundenen Kopf (22), wobei der Kopf (22) Folgendes aufweist
- einen Hauptmotor (30), der im Inneren des Kopfes (22) angeordnet ist, und eine Motorwelle aufweist, die entlang einer horizontalen Motorachse (AO) ausgerichtet ist,
- eine Hauptplatine (26), die unter dem Kopf (22) angeordnet ist, durch den Hauptmotor (30) in Drehung angetrieben wird, und konfiguriert ist, um ein Hauptarbeitswerkzeug (32) oberhalb der Basis (16) entsprechend einer Hauptarbeitsbewegung anzutreiben,
- einen Hilfsausgang (38), umfassend eine Einrastklaue für eine Einrichtung (40) und eine Hilfsausgangswelle (42), die durch den Hauptmotor (30) des Kopfes (22) in Drehung angetrieben wird,
wobei das elektrische Haushaltsküchen-Zubereitungssystem (10) darüber hinaus eine abnehmbare Zubehör-Untereinheit (14) umfasst, die Folgendes aufweist:
- eine verschließbare Einschließung (45), die einen geschlossenen Innenraum begrenzt, der dazu bestimmt ist, zuzubereitende Nahrungsmittel aufzunehmen,
- ein Schneidwerkzeug (50), das um eine vertikale Werkzeugachse (A2) herum drehbar ist, wobei das Schneidwerkzeug (50) in dem geschlossenen Innenraum enthalten ist, und eine zentrale Nabe (52) mit mindestens einer Schneidklinge (54) aufweist, die sich in Bezug auf die Werkzeugachse (A2) radial aus der zentralen Nabe (52) heraus erstreckt,
- eine Einrastklaue für eine Zubehör-Untereinheit (56) um das lösbare Einrasten der Zubehör-Untereinheit (14) an der elektrischen Haushaltsküchen-Zubereitungseinrichtung (12) zu erlauben,
- eine Eingangsdrehwelle (58), die einen Koppler (60) aufweist, um sich mechanisch an die Hilfsausgangswelle (42) zu koppeln, und das elektrische Haushaltsküchen-Zubereitungssystem (10) ein mechanisches Winkelgetriebe (62) umfasst, das zwischen dem Hauptmotor (30) und dem Schneidwerkzeug (50) der Zubehör-Untereinheit (14) angeordnet ist, wobei die Hilfsausgangswelle (42) der elektrischen Haushaltsküchen-Zubereitungseinrichtung (12) parallel zur Motorachse (AO) liegt, das mechanische Winkelgetriebe (62) in der Zubehör-Untereinheit (14) enthalten ist, und dabei zwischen der Eingangsdrehwelle (58) der Zubehör-Untereinheit (14) und dem Schneidwerkzeug (50) angeordnet ist, eine elektrische Haushaltsküchen-Zubereitungseinrichtung, in der die Hilfsausgangswelle mechanisch an die Eingangsdrehwelle gekoppelt ist, und in der die Eingangsdrehwelle mechanisch direkt mit einem ersten Zahnrad des mechanischen Winkelgetriebes verbunden ist
**dadurch gekennzeichnet, dass** die Hilfsausgangswelle (42) eine hintere Hilfsausgangswelle ist, dadurch, dass die Hilfsausgangswelle (42) durch ein hinteres Ende der Motorwelle gebildet wird.

2. Elektrisches Haushaltsküchen-Zubereitungssystem (10) nach Anspruch 1, **dadurch gekennzeichnet, dass** das mechanische Winkelgetriebe (62) konfiguriert ist, um eine Eingangswinkelgeschwindigkeit der Eingangsdrehwelle (58) durch ein Geschwindigkeitsübersetzungsverhältnis, das streng größer als 1 ist, vorzugsweise zwischen 1,1 und 1,4 liegt, in eine Arbeitswinkelgeschwindigkeit des Schneidwerkzeugs (50) zu übersetzen.

3. Elektrisches Haushaltsküchen-Zubereitungssystem (10) nach Anspruch 1, **dadurch gekennzeichnet, dass** das mechanische Winkelgetriebe (62) konfiguriert ist, um eine Eingangswinkelgeschwindigkeit der Eingangsdrehwelle (58) durch ein Geschwindigkeitsuntersetzungsverhältnis, das streng kleiner als 1 ist, vorzugsweise zwischen 0,1 und 0,9 liegt, in eine Arbeitswinkelgeschwindigkeit des Schneidwerkzeugs (50) zu untersetzen.

4. Elektrisches Haushaltsküchen-Zubereitungssystem (10) nach einem der Ansprüche 1 bis 3, **dadurch gekennzeichnet, dass** die Hilfsausgangswelle (42) durch den Hauptmotor (30) des Kopfes (22) mit einer Hilfsausgangsgeschwindigkeit in Drehung angetrieben wird, die gleich der Motorwinkelgeschwindigkeit der Motorwelle ist.

5. Elektrisches Haushaltsküchen-Zubereitungssystem nach einem der Ansprüche 1 bis 4, **dadurch gekennzeichnet, dass** der Kopf (22) ein Gehäuse aufweist, das eine Verlängerung in der Richtung der Motorwelle zwischen einem hinteren Ende, durch das der Kopf (22) mit dem Sockel verbunden ist, und einem vorderen Ende freitragend oberhalb der Basis (16) aufweist, und dadurch, dass der Hilfsausgang (38) ein hinterer Hilfsausgang ist, der auf einer Rückseite des hinteren Endes des Kopfes (22) angeordnet ist.

6. Elektrisches Haushaltsküchen-Zubereitungssystem (10) nach einem der Ansprüche 1 bis 5, **dadurch gekennzeichnet, dass** die Eingangsdrehwelle (58) der abnehmbaren Zubehör-Untereinheit (14) und die Werkzeugachse (A2) des Schneidwerkzeugs (50) senkrecht sind, und dadurch, dass das mechanische Winkelgetriebe (62) ein 90°-Winkelgetriebe umfasst.

7. Elektrisches Haushaltsküchen-Zubereitungssystem (10) nach einem der Ansprüche 1 bis 6, **dadurch gekennzeichnet, dass** die Zubehör-Untereinheit (14) eine integrierte Untereinheit ist, in der eine Werkzeugträgerbasis (46) der verschließbaren Einschließung (45) in nicht abnehmbarer Art und Weise an einen Kasten (64) angeschlossen ist, der das mechanische Winkelgetriebe (62) enthält.

8. Elektrisches Haushaltsküchen-Zubereitungssystem (10) nach einem der Ansprüche 1 bis 6, **dadurch gekennzeichnet, dass** die Zubehör-Untereinheit (14) einen Zubehör-Träger (70) und ein Zubehör (72) umfasst, die auf abnehmbare Art und Weise verbunden sind, wobei das mechanische Winkelgetriebe (62) im Zubehör-Träger (70) integriert ist, und wobei die verschließbare Einschließung (45) dem Zubehör (72) angehört.

9. Elektrisches Haushaltsküchen-Zubereitungssystem (10) nach Anspruch 8, **dadurch gekennzeichnet, dass** der Zubehör-Träger (70) umfasst:
- die Einrastklaue für die Zubehör-Untereinheit (56) ergänzend zur Einrastklaue der Einrichtung (40) für den Hilfsausgang (38) der elektrischen Haushaltsküchen-Zubereitungseinrichtung (12) um das Einrasten des Zubehör-Trägers (70) an der elektrischen Haushaltsküchen-Zubereitungseinrichtung (12) zu erlauben,
- eine Eingangsdrehwelle (58), konfiguriert, um mechanisch an die Hilfsausgangswelle (42) gekoppelt zu werden,
- eine zweite Einrastklaue (74), konfiguriert, um das Einrasten des Zubehörs (72) zu erlauben,
- eine Ausgangsdrehwelle (76), konfiguriert, um den Drehantrieb des Schneidwerkzeugs (50) des Zubehörs (72) zu erlauben, das in der zweiten Einrastklaue (74) eingerastet ist,
und dadurch, dass das mechanische Winkelgetriebe (62) zwischen der Eingangsdrehwelle (58) und der Ausgangsdrehwelle (76) des Zubehör-Trägers (70) angeordnet ist.

10. Elektrisches Haushaltsküchen-Zubereitungssystem (10) nach Anspruch 9, **dadurch gekennzeichnet, dass** die Eingangsdrehwelle (58) des Zubehör-Trägers (70) und die Einrastklaue der Zubehör-Untereinheit (56) des Zubehör-Trägers (70) auf einer selben ersten Seite des Zubehör-Trägers (70) angeordnet sind.

11. Elektrisches Haushaltsküchen-Zubereitungssystem (10) nach einem der Ansprüche 9 oder 10, **dadurch gekennzeichnet, dass** die Ausgangsdrehwelle (76) des Zubehör-Trägers (70) in der Mitte der zweiten Einrastklaue (74) des Zubehör-Trägers (70) angeordnet ist.

12. Elektrisches Haushaltsküchen-Zubereitungssystem (10) nach einem der Ansprüche 9 bis 11, **dadurch gekennzeichnet, dass** die Einrastklaue der Zubehör-Untereinheit (56) des Zubehör-Trägers (70) auf einer ersten Seite des Zubehör-Trägers (70) angeordnet ist, und dadurch, dass die zweite Einrastklaue (74) des Zubehör-Trägers (70) auf der zweiten Seite des Zubehör-Trägers (70) angeordnet ist, wobei sich die zweite Seite von der ersten Seite unterscheidet, und eine unterschiedliche Ausrichtung zu jener der ersten Seite aufweist.

13. Elektrisches Haushaltsküchen-Zubereitungssystem (10) nach einem der Ansprüche 9 bis 12, **dadurch gekennzeichnet, dass** es ein erstes Zubehör und ein zweites Zubehör umfasst, alle beide konfiguriert, um abwechselnd in der Einrastklaue (74) des Zubehör-Trägers (70) einzurasten.

## Claims

1. Electric household kitchen preparation system (10), of the type comprising:
- an electric household kitchen preparation device (12) comprising:
• a stand having a base (16) configured to receive a vessel (20),
• a head (22) linked to the base, the head (22) having
◊ a main motor (30) arranged inside the head (22) and having a motor shaft oriented along a horizontal motor axis (AO),
◊ a main plate (26) arranged under the head (22), rotated by the main motor (30), and configured to drive a main working tool (32) above the base (16) according to a main working movement,
◊ an auxiliary output (38) comprising a device fastening claw (40) and an auxiliary output shaft (42) which is rotated by the main motor (30) of the head (22),
the electric household kitchen preparation system (10) moreover comprising a removable accessory assembly (14) having:
- a reclosable chamber (45) delimiting a closed internal space intended to receive food to be prepared,
- a cutting tool (50), rotary about a vertical tool axis (A2), the cutting tool (50) being contained in the closed internal space and having a central axle (52) with at least one cutting blade (54) extending radially with respect to the tool axis (A2) from the central axle (52),
- an accessory assembly fastening claw (56) to enable the removable fastening of the accessory assembly (14) on the electric household kitchen preparation device (12),
- a rotary input shaft (58) having a coupler (60) to be mechanically coupled with the auxiliary output shaft (42), and the electric household kitchen preparation system (10) comprises an angled transfer mechanical transmission (62) arranged between the main motor (30) and the cutting tool (50) of the accessory assembly (14), the auxiliary output shaft (42) of the electric household kitchen preparation device (12) being parallel to the motor axis (AO), the angled transfer mechanical transmission (62) being comprised in the accessory assembly (14) by being arranged between the rotary input shaft (58) of the accessory assembly (14) and the cutting tool (50) of the electric household kitchen preparation system, wherein the auxiliary output shaft is mechanically coupled with the rotary input shaft, and wherein the rotary input shaft is directly mechanically connected to a first gearwheel of the angled transfer mechanical transmission,
**characterised in that** the auxiliary output shaft (42) is a rear auxiliary output shaft, **in that** the auxiliary output shaft (42) is formed by a rear end of the motor shaft.

2. Electric household kitchen preparation system (10) according to claim 1, **characterised in that** the angled transfer mechanical transmission (62) is configured to multiply an input angular speed of the rotary input shaft (58) in a working angular speed of the cutting tool (50) by a speed multiplication ratio strictly greater than 1, preferably of between 1.1 and 1.4.

3. Electric household kitchen preparation system (10) according to claim 1, **characterised in that** the angled transfer mechanical transmission (62) is configured to multiply an input angular speed of the rotary input shaft (58) in a working angular speed of the cutting tool (50) by a speed multiplication ratio strictly less than 1, preferably of between 0.1 and 0.9.

4. Electric household kitchen preparation system (10) according to one of claims 1 to 3, **characterised in that** the auxiliary output shaft (42) is rotated by the main motor (30) of the head (22) at an auxiliary output speed equal to the motor angular speed of the motor shaft.

5. Electric household kitchen preparation system according to one of claims 1 to 4, **characterised in that** the head (22) has a casing having an extension in the direction of the motor shaft, between a rear end, by which the head (22) is connected to the stand and a front end cantilevered above the base (16), and **in that** the auxiliary output (38) is a rear auxiliary output arranged on a rear face of the rear end of the head (22).

6. Electric household kitchen preparation system (10) according to one of claims 1 to 5, **characterised in that** the rotary input shaft (58) of the removable accessory assembly (14) and the tool axis (A2) of the cutting tool (50) are perpendicular and **in that** the angled transfer mechanical transmission (62) comprises an angled transfer at 90°.

7. Electric household kitchen preparation system (10) according to one of claims 1 to 6, **characterised in that** the accessory assembly (14) is an integrated assembly, wherein a tool-holding stand (46) of the reclosable chamber (45) is non-removably linked to a box (64) which contains the angled transfer mechanical transmission (62).

8. Electric household kitchen preparation system (10) according to any one of claims 1 to 6, **characterised in that** the accessory assembly (14) comprises an accessory holder (70) and an accessory (72) removably linked, wherein the angled transfer mechanical transmission (62) is integrated with the accessory holder (70), and wherein the reclosable chamber (45) forms part of the accessory (72).

9. Electric household kitchen preparation system (10) according to claim 8, **characterised in that** the accessory holder (70) comprises:
- the complementary accessory assembly fastening claw (56) of the device fastening claw (40) of the auxiliary output (38) of the electric household kitchen preparation device (12) to enable the fastening of the accessory holder (70) to the electric household kitchen preparation device (12),
- a rotary input shaft (58) configured to be mechanically coupled with the auxiliary output shaft (42),
- a second fastening claw (74) configured to enable the fastening of the accessory (72),
- a rotary output shaft (76) configured to enable the rotation of the cutting tool (50) of the accessory (72) fastened on the second fastening claw (74),
and **in that** the angled transfer mechanical transmission (62) is arranged between the rotary input shaft (58) and the rotary output shaft (76) of the accessory holder (70).

10. Electric household kitchen preparation system (10) according to claim 9, **characterised in that** the rotary input shaft (58) of the accessory holder (70) and the accessory assembly fastening claw (56) of the accessory holder (70) are arranged on one same first face of the accessory holder (70).

11. Electric household kitchen preparation system (10) according to one of claims 9 or 10, **characterised in that** the rotary output shaft (76) of the accessory holder (70) is arranged at the centre of the second fastening claw (74) of the accessory holder (70).

12. Electric household kitchen preparation system (10) according to one of claims 9 to 11, **characterised in that** the accessory assembly fastening claw (56) of the accessory holder (70) is arranged on a first face of the accessory holder (70), and **in that** the second fastening claw (74) of the accessory holder (70) is arranged on a second face of the accessory holder (70), the second face being distinct from the first face and having an orientation distinct from that of the first face.

13. Electric household kitchen preparation system (10) according to one of claims 9 to 12, **characterised in that** it comprises a first accessory and a second accessory, both configured to be alternatively fastened on the second fastening claw (74) of the accessory holder (70).
